# EUROPEAN PATENT SPECIFICATION

(11) **EP 3 766 942 B1**
(45) Date of publication and mention of the grant of the patent: **13.11.2024**
(21) Application number: 19766527.6
(22) Date of filing: 18.03.2019
(51) Int. Cl.: C09D 175/04, C09D 127/12, C08F 214/24, C08F 214/26, C08G 18/62, C08G 18/79, C08K 3/22, C09D 127/18, C09D 201/04

(54) **STERILIZATION METHOD COMPRISING EXPOSING A COATING FILM TO HYDROGEN PEROXIDE**
STERILISATIONSVERFAHREN, BEI DEM EIN BESCHICHTUNGSFILM WASSERSTOFFPEROXID AUSGESETZT WIRD
PROCÉDÉ DE STÉRILISATION CONTENANT L'EXPOSITION D'UN FILM DE REVÊTEMENT AU PEROXYDE D'HYDROGÈNE

(30) Priority: 16.03.2018 JP 2018049482
(43) Date of publication of application: 20.01.2021
(73) Proprietor: DAIKIN INDUSTRIES, LTD., Osaka-Shi, Osaka 530-0001 (JP)
(72) Inventor: IMOTO, Katsuhiko, Osaka-Shi, Osaka 530-8323 (JP); WADA, Susumu, Osaka-Shi, Osaka 530-8323 (JP); NAGATO, Masaru, Osaka-Shi, Osaka 530-8323 (JP); TOMOOKA, Hiroshi, Osaka-Shi, Osaka 530-8323 (JP)
(74) Representative: Goddar, Heinz J.
(86) International application number: PCT/JP2019/011110
(87) International publication number: WO 2019/177170

(56) References cited:
- WO-A1-2015/190462
- WO-A1-2015/190462
- JP-A- 2003 088 489
- JP-A- 2006 055 437
- JP-A- 2017 165 958
- JP-A- 2018 135 442
- JP-A- H10 306 189
- US-A- 5 548 019
- US-A1- 2004 019 145

## Description

### TECHNICAL FIELD

The invention relates to a sterilization method, as set out in claim 1.

### BACKGROUND ART

In facilities such as factories for producing food or pharmaceutical products and medical buildings, interior space and equipment are periodically sterilized in order to keep the cleanliness thereof. Conventionally, articles to be sterilized typically have surfaces coated with acrylic urethane in order to prevent deterioration of substrates due to sterilization treatment.

Meanwhile, advanced sterilization treatments such as a sterilization method using hydrogen peroxide tend to be employed recently. Thus, materials have been studied which are resistant to such advanced sterilization treatments.

For example, Patent Literature 1 proposes a flexible tube for endoscope, including a metal core that includes a spiral tube formed by spirally winding a band-shape material and a net-like tube obtainable by knitting a fine line and thereby forming a ring shape around the spiral tube; a 1- to 100-pm thick light blocking layer formed around the metal core; a transparent casing layer that is formed around the light blocking layer, has a greater thickness than the light blocking layer, and contains an elastomer containing a polymerizable polymer; and a bright color marking between the light blocking layer and the transparent casing layer or on a peripheral surface of the light blocking layer.

### CITATION LIST

### - Patent Literature

Patent Literature 1: JP 2010-284436 A

WO2015/190462 A1 and US 5548019 A disclose a cured product of a coating material composition comprising a hydroxy group-containing fluoropolymer and a polyisocyanate compound, wherein said cured product has both fluorine atoms and urethane bonds and is used a coating film.

US 2004/019145 A1 discloses a cured product of a coating composition comprising a fluorine-containing copolymer having hydroxyl, and a polyisocyanate compound, wherein said cured product has both fluorine atoms and urethane bonds and is used as coating film.

### SUMMARY OF INVENTION

### - Technical Problem

Conventional acrylic urethane coating films tend to be deteriorated by hydrogen peroxide. Use of hydrogen peroxide as a sterilization agent thus causes deterioration of a coating film of a sterilized article as well as short-period deterioration of a substrate of the article.

In view of the situation, the invention aims to provide a sterilization method using a coating film that is less likely to be deteriorated even after exposure to hydrogen peroxide.

### - Solution to Problem

The inventors found for the first time that a coating film containing a fluorine atom and a urethane bond has excellent resistance to hydrogen peroxide. The inventors thereby found that this coating film was suitable for a novel application, that is, use in an environment including exposure to hydrogen peroxide, to complete the invention.

The invention relates to a sterilization method comprising exposing a coating film to hydrogen peroxide, wherein the coating film comprises a fluorine atom and a urethane bond,
wherein the coating film is a cured product of a coating material composition comprising a hydroxy group-containing fluoropolymer and a polyisocyanate compound,
wherein the hydroxyl-group containing fluoropolymer has a unit based on a fluorine-containing monomer and a unit based on a hydroxy group-containing monomer,
wherein the unit based on a fluorine-containing monomer is present in an amount of 20 to 60 mol% of all the monomer units of the fluoropolymer.

Also provided is a coated article including: a substrate, and the coating film formed above the substrate.

The coated article is preferably an interior material of a factory for producing a food or pharmaceutical product, an exterior material of a robot used in the factory, or an exterior material of medical equipment.

### - Advantageous Effects of Invention

The coating film having the above structure is less likely to be deteriorated even after exposure to hydrogen peroxide.

The coated article includes the coating film. Accordingly, the coating film, as well as a substrate below the coating film, is less likely to be deteriorated even after the coated article is exposed to hydrogen peroxide.

### DESCRIPTION OF EMBODIMENTS

The invention will specifically be described hereinbelow.

The coating film is used in an environment including exposure to hydrogen peroxide.

The coating film may be exposed to hydrogen peroxide by, for example, a method of immersing the coating film in a hydrogen peroxide solution or a method of exposing the coating film to hydrogen peroxide mist, hydrogen peroxide gas, or hydrogen peroxide plasma.

The coating film is exposed to hydrogen peroxide in a condition employed for a sterilization method using hydrogen peroxide, for example. Examples of the sterilization method using hydrogen peroxide include hydrogen peroxide sterilization in which microorganisms are killed by oxidation power of hydrogen peroxide and hydrogen peroxide plasma sterilization (hydrogen peroxide low-temperature gas plasma sterilization) in which microorganisms are killed by an oxidation reaction of radicals that are generated by converting hydrogen peroxide into plasma.

The coating film contains a fluorine atom and a urethane bond (-OCONH-). This structure reduces the tendency of the coating film to be deteriorated even after exposure to hydrogen peroxide.

The presence of fluorine atoms in the coating film can be confirmed by elemental analysis, or NMR. The presence of urethane bonds in the coating film can be confirmed by infrared absorption spectrum.

The coating film preferably contains a fluorine-carbon bond. The presence of fluorine-carbon bonds in the coating film can be confirmed by infrared absorption spectrum.

The coating film is a cured product containing a urethane bond derived from a coating material composition that contains a hydroxy group-containing fluoropolymer and a polyisocyanate compound. This structure can provide a coating film that is further less likely to be deteriorated even after exposure to hydrogen peroxide.

The hydroxy group herein means a group represented by -OH excluding a hydroxy group as a moiety of a carboxyl group (-COOH). The hydroxy group can be introduced into a fluoropolymer by copolymerizing a hydroxy group-containing monomer.

The fluoropolymer has a unit based on a fluorine-containing monomer and a unit based on a hydroxy group-containing monomer.

Examples of the fluorine-containing monomer include tetrafluoroethylene, chlorotrifluoroethylene, vinylidene fluoride, vinyl fluoride, trans-1,3,3,3-tetrafluoropropene (HFO-1234ze), 2,3,3,3-tetrafluoropropene (HFO-1234yf), and fluorovinyl ether. One or two or more of these may be used.

Preferred among these is at least one selected from the group consisting of tetrafluoroethylene, chlorotrifluoroethylene, and vinylidene fluoride, and more preferred is at least one selected from the group consisting of tetrafluoroethylene and chlorotrifluoroethylene.

The unit based on a fluorine-containing monomer is present in an amount of 20 to 60 mol%, more preferably 30 to 60 mol%, still more preferably 35 to 55 mol%, of all the monomer units of the fluoropolymer.

The amounts of monomer units constituting a polymer herein can be calculated by an appropriate combination of NMR, FT-IR, elemental analysis, and X-ray fluorescence analysis according to the type of the monomer.

The hydroxy group-containing monomer preferably includes at least one selected from the group consisting of hydroxyalkyl vinyl ethers, hydroxyalkyl allyl ethers, vinyl hydroxycarboxylates, allyl hydroxycarboxylates, and hydroxyalkyl (meth)acrylates, more preferably at least one selected from the group consisting of hydroxyalkyl vinyl ethers and hydroxyalkyl allyl ethers, still more preferably a hydroxyalkyl vinyl ether.

Examples of the hydroxyalkyl vinyl ethers include 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether, 6-hydroxyhexyl vinyl ether, and 4-(hydroxymethyl)cyclohexyl methyl vinyl ether.

Examples of the hydroxyalkyl allyl ethers include 2-hydroxyethyl allyl ether, 4-hydroxybutyl allyl ether, and glycerol monoallyl ether.

Examples of the vinyl hydroxycarboxylates include vinyl hydroxyacetate, vinyl hydroxypropanoate, vinyl hydroxybutanoate, vinyl hydroxyhexanoate, and vinyl (4-hydroxycyclohexyl)acetate.

Examples of the allyl hydroxycarboxylates include allyl hydroxyacetate, allyl hydroxypropanoate, allyl hydroxybutanoate, allyl hydroxyhexanoate, and allyl (4-hydroxycyclohexyl)acetate.

Examples of the hydroxyalkyl (meth)acrylates include 2-hydroxyethyl acrylate and 2-hydroxyethyl methacrylate.

In particular, the hydroxy group-containing monomer is still more preferably one represented by the formula (A) :

CH₂=CH-(CH₂)ₗ-O-(CH₂)ₘ-OH

(wherein l is 0 or 1, m is an integer of 2 to 20), particularly preferably at least one monomer selected from the group consisting of 4-hydroxybutyl vinyl ether, 2-hydroxyethyl vinyl ether, 2-hydroxyethyl allyl ether, and 4-hydroxybutyl allyl ether.

The amount of the unit based on the hydroxy group-containing monomer is preferably 5 to 40 mol%, more preferably 7 to 35 mol%, of all the monomer units constituting the fluoropolymer.

In order to improve the compatibility, solubility, and adhesiveness, the fluoropolymer preferably further has a unit based on a vinyl ester that contains neither a hydroxy group nor an aromatic ring.

The vinyl ester that contains neither a hydroxy group nor an aromatic ring is preferably a vinyl carboxylate, more preferably at least one selected from the group consisting of vinyl acetate, vinyl propionate, vinyl butyrate, vinyl isobutyrate, vinyl pivalate, vinyl caproate, vinyl versatate, vinyl laurate, vinyl stearate, and vinyl cyclohexylcarboxylate, still more preferably at least one selected from the group consisting of vinyl acetate, vinyl versatate, vinyl laurate, vinyl stearate, and vinyl cyclohexylcarboxylate, particularly preferably at least one selected from the group consisting of vinyl acetate and vinyl versatate.

In order to achieve further enhanced compatibility, solubility, and adhesiveness, the vinyl ester is preferably a vinyl carboxylate in which the carboxylic acid has a carbon number of 6 or greater, more preferably a vinyl carboxylate in which the carboxylic acid has a carbon number of 9 or greater. The upper limit of the carbon number of the carboxylic acid in the vinyl carboxylate is preferably 20, more preferably 15. In terms of antibiotic properties, the vinyl ester is most preferably a vinyl versatate such as vinyl neononanoate (Veova 9) or vinyl neodecanoate (Veova 10).

The vinyl ester contains neither a hydroxy group nor an aromatic ring. Preferably, the vinyl ester is free from a halogen atom.

The amount of the unit based on the vinyl ester that contains neither a hydroxy group nor an aromatic ring is preferably 1 to 40 mol%, more preferably 10 to 30 mol% of all the monomer units constituting the fluoropolymer.

The fluoropolymer preferably has a number average molecular weight of 3,000 to 100,000. The number average molecular weight is more preferably 5,000 or higher, still more preferably 8,000 or higher, while more preferably 50,000 or lower, still more preferably 35,000 or lower. Too low a number average molecular weight may cause a failure in providing a coating film having resistance to hydrogen peroxide. Too high a number average molecular weight may cause an increase in viscosity of the coating, leading to difficulty in handling of the coating. The number average molecular weight may be determined by gel permeation chromatography (GPC) with tetrahydrofuran as an eluent.

The fluoropolymer preferably has a glass transition temperature (second run) of 0°C to 70°C, more preferably 5°C to 60°C, measured using a differential scanning calorimeter (DSC). Too low a glass transition temperature may cause failure in providing a coating film having resistance to hydrogen peroxide. Too high a glass transition temperature may cause an increase in viscosity of the coating, leading to difficulty in handling of the coating.

In order to achieve good compatibility with substances such as polyisocyanate compounds, the fluoropolymer preferably has an acid value of 0 to 28.8 mgKOH/g, more preferably 1 to 12 mgKOH/g.

The fluoropolymer may further contain a unit based on a monomer other than the fluorine-containing monomer, the hydroxy group-containing monomer, and the vinyl ester that contains neither a hydroxy group nor an aromatic ring. For example, the fluoropolymer may contain a unit based on an aromatic ring-containing, hydroxy group-free vinyl carboxylate, a carboxyl group-containing monomer, an amino group-containing monomer, a hydrolyzable silyl group-containing monomer, a hydroxy group-free alkyl vinyl ether, a halogen atom and hydroxy group-free olefin, or the like. The amount of the monomer unit(s) may be 0 to 15 mol%, preferably 0.1 to 10 mol%, more preferably 0.5 to 8 mol%, of all the monomer units constituting the fluoropolymer.

Examples of the aromatic ring-containing, hydroxy group-free vinyl carboxylate include vinyl benzoate and vinyl para-t-butyl benzoate.

The carboxyl group-containing monomer is preferably one represented by the formula (B):

R^{1a}R^{2a}C=CR^{3a}-(CH₂)ₙ-COOH

wherein R^{1a}, R^{2a}, and R^{3a} are the same as or different from each other, and are each a hydrogen atom or a C1-C10 linear or branched alkyl group; and n is an integer of 0 or greater. Examples thereof include acrylic acid, methacrylic acid, vinylacetic acid, crotonic acid, pentenoic acid, hexenoic acid, heptenoic acid, octenoic acid, nonenoic acid, decenoic acid, undecylenic acid, dodecenoic acid, tridecenoic acid, tetradecenoic acid, pentadecenoic acid, hexadecenoic acid, heptadecenoic acid, octadecenoic acid, nonadecenoic acid, eicosenoic acid, and 22-tricosenoic acid. Preferred among these is at least one selected from the group consisting of acrylic acid, crotonic acid, and undecylenic acid, more preferably at least one selected from the group consisting of acrylic acid and crotonic acid.

Examples of the carboxyl group-containing monomer also include cinnamic acid, 3-allyloxy propionic acid, itaconic acid, itaconic acid monoester, maleic acid, maleic acid monoester, maleic anhydride, fumaric acid, fumaric acid monoester, vinyl phthalate, vinyl pyromellitate, citraconic acid, mesaconic acid, and aconitic acid.

Examples of the amino group-containing monomer include amino vinyl ethers represented by CH₂=CH-O-(CH₂)ₓ-NH₂ (x = 0 to 10), amines represented by CH₂=CH-O-CO(CH₂)ₓ-NH₂ (x = 1 to 10), aminomethylstyrene, vinylamine, acrylamide, vinylacetamide, and vinylformamide.

Examples of the hydrolyzable silyl group-containing monomer include (meth)acrylic acid esters such as CH₂=CHCO₂(CH₂)₃Si(OCH₃)₃, CH₂=CHCO₂ (CH₂)₃Si(OC₂H₅)₃, CH₂=C(CH₃)CO₂(CH₂)₃Si(OCH₃)₃, CH₂=C(CH₃)CO₂(CH₂)₃Si(OC₂H₅)₃, CH₂=CHCO₂(CH₂)₃SiCH₃(OC₂H₅)₂, CH₂=C(CH₃)CO₂(CH₂)₃SiC₂H₅(OCH₃)₂, CH₂=C(CH₃)CO₂(CH₂)₃Si(CH₃)₂(OC₂H₅), CH₂=C(CH₃)CO₂(CH₂)₃Si(CH₃)₂OH, CH₂=CH(CH₂)₃Si(OCOCH₃)₃, CH₂=C(CH₃)CO₂(CH₂)₃SiC₂H₅(OCOCH₃)₂, CH₂=C(CH₃)CO₂(CH₂)₃SiCH₃(N(CH₃)COCH₃)₂, CH₂=CHCO₂(CH₂)₃SiCH₃[ON(CH₃)C₂H₅]₂, and CH₂=C(CH₃)CO₂(CH₂)₃SiC₆H₅[ON(CH₃)C₂H₅]₂; vinyl silanes such as CH₂=CHSi[ON=C(CH₃)(C₂H₅)]₃, CH₂=CHSi(OCH₃)₃, CH₂=CHSi(OC₂H₅)₃, CH₂=CHSiCH₃(OCH₃)₂, CH₂=CHSi(OCOCH₃)₃, CH₂=CHSi(CH₃)₂(OC₂H₅), CH₂=CHSi(CH₃)₂SiCH₃(OCH₃)₂, CH₂=CHSiC₂H₅(OCOCH₃)₂, CH₂=CHSiCH₃[ON(CH₃)C₂H₅]₂, vinyltrichlorosilane and partial hydrolysates of these; and vinyl ethers such as trimethoxysilylethyl vinyl ether, triethoxysilylethyl vinyl ether, trimethoxysilylbutyl vinyl ether, methyldimethoxysilylethyl vinyl ether, trimethoxysilylpropyl vinyl ether, and triethoxysilylpropyl vinyl ether.

Examples of the hydroxy group-free alkyl vinyl ether include methyl vinyl ether, ethyl vinyl ether, n-propyl vinyl ether, isopropyl vinyl ether, n-butyl vinyl ether, isobutyl vinyl ether, tert-butyl vinyl ether, 2-ethylhexyl vinyl ether, cyclohexyl vinyl ether, dodecyl vinyl ether, and octadecyl vinyl ether. Preferred among these is at least one selected from the group consisting of ethyl vinyl ether and cyclohexyl vinyl ether.

Examples of the olefin that contains neither a halogen atom nor a hydroxy group include fluorine-free olefins such as ethylene, propylene, n-butene, and isobutene.

Examples of the fluoropolymer include (1) a perfluoroolefin-based polymer mainly having a perfluoroolefin unit, (2) a chlorotrifluoroethylene (CTFE)-based polymer mainly having a CTFE unit, (3) a vinylidene fluoride (VdF)-based polymer mainly having a VdF unit, (4) a fluoroalkyl group-containing polymer mainly having a fluoroalkyl unit, (5) a vinyl acetate-based polymer mainly having a vinyl acetate unit, and (6) a hydrofluoroolefin-based polymer mainly having a hydrofluoroolefin unit.

In terms of resistance to hydrogen peroxide, the fluoropolymer is preferably any of the polymers (1), (2), and (5), more preferably any of the polymers (1) and (2), among the polymers (1) to (6).

### (1) Perfluoroolefin-based polymer mainly having a perfluoroolefin unit

The perfluoroolefin-based polymer mainly having a perfluoroolefin unit preferably has a perfluoroolefin unit. The perfluoroolefin unit is preferably present in an amount of 20 to 49 mol% of all the polymerized units of the perfluoroolefin-based polymer. The lower limit is more preferably 30 mol%, still more preferably 40 mol%. The upper limit is more preferably 47 mol%.

Examples of the perfluoroolefin include tetrafluoroethylene (TFE), hexafluoropropylene (HFP), and perfluoro(alkyl vinyl ether) (PAVE). Preferred among these is TFE because it has excellent pigment dispersibility, weather resistance, copolymerizability, and chemical resistance.

The perfluoroolefin-based polymer preferably has a unit of a different monomer copolymerizable with a perfluoroolefin.

Examples of the different monomer copolymerizable with a perfluoroolefin include, but are not limited to, vinyl carboxylates such as vinyl acetate, vinyl propionate, vinyl butyrate, vinyl isobutyrate, vinyl pivalate, vinyl caproate, vinyl versatate, vinyl laurate, vinyl stearate, vinyl cyclohexyl carboxylate, vinyl benzoate, and vinyl para-t-butyl benzoate; alkyl vinyl ethers such as methyl vinyl ether, ethyl vinyl ether, butyl vinyl ether, and cyclohexyl vinyl ether; fluorine-free olefins such as ethylene, propylene, n-butene, and isobutene; and fluorine-based monomers such as vinylidene fluoride (VdF), chlorotrifluoroethylene (CTFE), vinyl fluoride (VF), and fluorovinyl ether.

Examples of the perfluoroolefin-based polymer mainly having a perfluoroolefin unit include a TFE/isobutylene/hydroxybutyl vinyl ether/different monomer copolymer, a TFE/vinyl versatate/hydroxybutyl vinyl ether/different monomer copolymer, a TFE/ethyl vinyl ether/hydroxybutyl vinyl ether/different monomer copolymer, a TFE/VdF/hydroxybutyl vinyl ether/different monomer copolymer, and a HFP/vinyl versatate/hydroxybutyl vinyl ether/different monomer copolymer. Preferred among these is at least one copolymer selected from the group consisting of a TFE/isobutylene/hydroxybutyl vinyl ether/different monomer copolymer and a TFE/vinyl versatate /hydroxybutyl vinyl ether/different monomer copolymer. Examples of a coating material containing such a curable polymer include Zeffle^{®} GK series available from Daikin Industries, Ltd.

### (2) Chlorotrifluoroethylene (CTFE)-based polymer mainly having a CTFE unit

An example of the CTFE-based polymer mainly having a CTFE unit is a CTFE/ethyl vinyl ether/hydroxybutyl vinyl ether/different monomer copolymer. Examples of the curable polymer coating material containing the CTFE-based polymer include Lumiflon^{®} available from Asahi Glass Co., Ltd., Fluonate^{®} available from DIC Corporation, and Cefral Coat^{®} available from Central Glass Co., Ltd.

### (3) Vinylidene fluoride (VdF)-based polymer mainly having a VdF unit

An example of the VdF-based polymer mainly having a VdF unit is a VdF/TFE/hydroxybutyl vinyl ether/different monomer copolymer.

### (4) Fluoroalkyl group-containing polymer mainly having a fluoroalkyl unit

An example of the fluoroalkyl group-containing polymer mainly having a fluoroalkyl unit is a CF₃CF₂(CF₂CF₂)ₙCH₂CH₂OCOCH=CH₂ (including both the substance with n = 3 and the substance with n = 4)/2-hydroxyethyl methacrylate/stearyl acrylate copolymer. Examples of the fluoroalkyl group-containing polymer include Unidyne^{®} and Ftone^{®} available from Daikin Industries, Ltd. and Zonyl^{®} available from Du Pont.

### (5) Vinyl acetate-based polymer mainly having a vinyl acetate unit

An example of the vinyl acetate-based polymer mainly having a vinyl acetate unit is a fluorine-containing monomer/vinyl acetate/hydroxy group-containing monomer represented by the formula (A)/carboxyl group-containing monomer represented by the formula (B) copolymer. The fluorine-containing monomer/vinyl acetate/hydroxy group-containing monomer represented by the formula (A)/carboxyl group-containing monomer represented by the formula (B) copolymer preferably has a molar ratio of (15 to 50)/(20 to 75)/(5 to 22)/(0.1 to 5) .

The hydroxy group-containing monomer represented by the formula (A) preferably includes at least one monomer selected from the group consisting of hydroxyethyl vinyl ether (HEVE), hydroxybutyl vinyl ether (HBVE), 2-hydroxyethyl allyl ether, and 4-hydroxybutyl allyl ether.

In the carboxyl group-containing monomer represented by the formula (B), greater n is preferred in order to improve the polymerization reactivity and the compatibility with additives such as a curing agent. The number n is preferably 2 or greater, more preferably 4 or greater, still more preferably 8 or greater. The upper limit is 20, for example. Examples of the carboxyl group-containing monomer represented by the formula (B) preferably include at least one selected from the group consisting of pentenoic acid, hexenoic acid, heptenoic acid, octenoic acid, nonenoic acid, decenoic acid, undecylenic acid, dodecenoic acid, tridecenoic acid, tetradecenoic acid, pentadecenoic acid, hexadecenoic acid, heptadecenoic acid, octadecenoic acid, nonadecenoic acid, eicosenoic acid, and 22-tricosenoic acid. More preferred is undecylenic acid.

The copolymer may have a different monomer unit. The different monomer unit is preferably present in an amount of 0 mol% or 25 mol% or less of all the structural units constituting the copolymer. Examples of the different monomer include non-aromatic vinyl esters other than vinyl acetate. Examples of the non-aromatic vinyl ester include vinyl versatate (Veova 9, Veova 10), vinyl laurate, vinyl stearate, and vinyl cyclohexyl carboxylate.

The vinyl acetate-based polymer preferably has a number average molecular weight of 3,000 to 100,000. The number average molecular weight is more preferably 5,000 or higher, still more preferably 8,000 or higher, while more preferably 50,000 or lower, still more preferably 35,000 or lower. The number average molecular weight may be determined by gel permeation chromatography (GPC) with tetrahydrofuran as an eluent.

The vinyl acetate-based polymer preferably has a glass transition temperature (second run) of 0°C to 70°C, more preferably 5°C to 60°C, measured using a differential scanning calorimeter (DSC).

The vinyl acetate-based polymer preferably has an acid value of 0 to 28.8 mgKOH/g, more preferably 1 to 12 mgKOH/g. The acid value is measured in conformity with JIS K 5601.

The vinyl acetate-based polymer preferably has a hydroxy group value of 29 to 150 mgKOH/g, more preferably 140 mgKOH/g or lower. The hydroxy group value can be calculated from the charged amount and solids concentration of the hydroxy group monomer during polymerization.

### (6) Hydrofluoroolefin-based polymer mainly having a hydrofluoroolefin unit

An example of the hydrofluoroolefin-based polymer mainly having a hydrofluoroolefin unit is a hydrofluoroolefin/vinyl versatate/hydroxybutyl vinyl ether/different monomer copolymer.

The fluoropolymer can be produced by any one of the methods disclosed in JP 2004-204205 A and JP 2013-177536 A, for example. The composition of the fluoropolymer can be determined by elemental analysis, NMR, or the like.

Examples of the polyisocyanate compound include, but are not limited to, 2,4-tolylenediisocyanate, diphenylmethane-4,4'-diisocyanate, xylylene diisocyanate, isophorone diisocyanate, lysinemethyl ester diisocyanate, methylcyclohexyl diisocyanate, trimethylhexamethylene diisocyanate, hexamethylene diisocyanate, n-pentane-1,4-diisocyanate, a trimer of these, an adduct, biuret, and isocyanurate of these, a polymer of these containing two or more isocyanate groups, and further blocked isocyanates. The polyisocyanate compound is preferably a hexamethylene diisocyanate. Examples of the polyisocyanate compound include Desmodur N3900 (available from Covestro) and Duranate TPA-100 (available from Asahi Kasei Corp.).

The polyisocyanate compound is preferably present in an amount of 0.1 to 5 equivalents, more preferably 0.5 to 1.5 equivalents, per equivalent of hydroxy group in the fluoropolymer.

The coating material composition may further contain a solvent. The solvent is preferably an organic solvent. Examples thereof include esters such as ethyl acetate, n-butyl acetate, t-butyl acetate, isopropyl acetate, isobutyl acetate, cellosolve acetate, methoxy propyl acetate, and propylene glycol methyl ether acetate; ketones such as acetone, methyl ethyl ketone, methyl isobutyl ketone, and cyclohexanone; cyclic ethers such as tetrahydrofuran and dioxane; amides such as N,N-dimethylformamide and N,N-dimethyl acetamide; aromatic hydrocarbons such as xylene, toluene, solvent naphtha, and coal tar naphtha; glycol ethers such as propylene glycol methyl ether and ethyl cellosolve; diethylene glycol esters such as carbitol acetate; aliphatic hydrocarbons such as n-pentane, n-hexane, n-heptane, n-octane, n-nonane, n-decane, n-undecane, n-dodecane, and mineral spirit; and solvent mixtures thereof.

The coating material composition, when containing a solvent, preferably contains the fluoropolymer in an amount of 5 to 95% by mass, more preferably 10 to 70% by mass.

The coating material composition may further contain an additive according to desired properties. Examples of the additive include a curing accelerator, a curing retardant, a pigment, a pigment dispersant, a defoamer, a leveling agent, an ultraviolet absorber, a light stabilizer, a thickener, an adhesiveness promoter, and a flatting agent. The coating material composition preferably contains the pigment among these. Examples of the pigment include titanium oxide, talc, and barium sulfate.

The coating material composition is formed into a cured coating film by applying the coating material composition to a substrate or a layer disposed on a substrate and curing the coating material composition.

The coating material composition may be applied by spray coating, roll coating, dip (immersion) coating, impregnation coating, spin-flow coating, curtain flow coating, or coating with a roller, a blush, or a doctor blade.

The coating material composition can be cured normally at 0°C to 220°C for about several tens of seconds to about ten days.

The coating film preferably has a thickness of 2 to 100 pm, more preferably 5 to 50 µm.

Also provided is a coated article including a substrate and the coating film formed above the substrate. The coated article is used in an environment including exposure of the coating film to hydrogen peroxide. The coating film, as well as the substrate below the coating film, is less likely to be deteriorated even when the coated article is used in an environment including exposure of the coating film to hydrogen peroxide.

Examples of the substrate include metals such as iron, stainless steel, copper, aluminum, and brass; glass products such as glass plates and woven and non-woven fabrics of glass fiber; molded or coated articles of general-purpose resins or heat resistant resins such as polyurethane, polyethylene terephthalate (PET), acrylic resin, polyvinyl chloride, polycarbonate, polypropylene, polyoxymethylene, polyimide, polyamide imide, polysulfone, polyether sulfone, and polyether ether ketone; molded or coated articles of general-purpose rubbers such as natural rubber, isoprene rubber, butadiene rubber, chloroprene rubber, SBR, butyl rubber, NBR, and EPDM; molded or coated articles of heat resistant rubbers such as silicone rubber and fluoroelastomer; and woven and non-woven fabrics of natural fiber and synthesized fiber.

The coating film may be directly formed on the substrate or may be formed above the substrate with a different layer in between. The different layer is preferably a layer formed from epoxy resin, urethane resin, acrylic urethane resin, silicone resin, or polyester resin, more preferably a layer formed from epoxy resin, urethane resin, or acrylic urethane resin, still more preferably a layer formed from acrylic urethane resin.

The coating film is preferably located on the outermost surface of the coated article. In other words, no other layers are preferably formed on the coating film (on the side remote from the substrate). This structure enables the coating film to significantly exhibit the resistance to hydrogen peroxide.

The coated article includes a substrate that is less likely to be deteriorated even after exposure of the coated article to hydrogen peroxide. Thus, the coated article is suitably used as a variety of articles to be treated with hydrogen peroxide for sterilization. The coated article is suitably used as an interior material of factories for producing food or pharmaceutical products, medical buildings, and experimental buildings, and as an exterior material of devices used in these factories and buildings, for example. The coated article is particularly suitably used as an interior material of factories for producing food (preferably confectionery) or pharmaceutical products, an exterior material of robots used in the factories, and an exterior material of medical equipment. A preferred example of the exterior material of medical equipment is an exterior material (casing material) of a medical endoscope.

Other aspects are use of the coating film of the invention in an environment including exposure to hydrogen peroxide and use of the coating film of the invention on a surface of a coated article to be exposed to hydrogen peroxide.

### EXAMPLES

The invention is described hereinbelow referring to, but not limited to, examples.

The parameters in the examples were determined by the following methods.

### Production Example 1 (Production of hydroxy group-containing, fluorine-containing copolymer)

A 6,000-ml stainless-steel autoclave was charged with 2,500 g of butyl acetate, 884 g of vinyl neononanoate (Veova 9), and 229 g of 4-hydroxybutyl vinyl ether (HBVE), and purged with nitrogen under reduced pressure. Then, 617 g of tetrafluoroethylene (TFE) was put thereinto. The contents were heated to 60.0°C under stirring, and 30 g of a peroxide-based polymerization initiator was put thereinto to initiate polymerization. The reaction was stopped when the internal pressure of the reactor was reduced from 1.0 MPaG to 0.4 MPaG. Thus, a solution was obtained which contained a polymer having a TFE/HBVE/vinyl neononanoate ratio by mol% of 45/16/39.

### Preparation Example 1 Clear coating material

To 100 parts by mass of a butyl acetate solution containing 50% by mass of the fluorine-containing copolymer of Production Example 1 was introduced an isocyanate-based curing agent (Duranate TPA-100, available from Asahi Kasei Corp.) such that the equivalent ratio (NCO/OH) of the isocyanate group (NCO) in the isocyanate-based curing agent to the hydroxy group (OH) in the polymer was 1/1. Thus, a coating material composition 1 was obtained.

### Preparation Example 2 White coating material

An amount of 54 parts by mass of titanium oxide (D918, available from Sakai Chemical Industry Co., Ltd.) serving as a white pigment was dispersed in 130 parts by mass of a butyl acetate solution containing 50% by mass of the fluorine-containing copolymer produced in Production Example 1 using a pigment disperser. Thus, a composition was obtained as a pigment-containing dispersion.

Then, to 100 parts by mass of the composition was introduced an isocyanate-based curing agent (Duranate TPA-100, available from Asahi Kasei Chemicals Corporation) such that the equivalent ratio (NCO/OH) of the isocyanate group (NCO) in the isocyanate curing agent to the hydroxy group (OH) in the polymer was 1/1. Thus, a coating material composition 2 was obtained.

### Production Example 2 (Production of hydroxy group-containing fluorine copolymer)

A solution was obtained as in Production Example 1, which contained a polymer having a chlorotrifluoroethylene/ethyl vinyl ether/2-hydroxyethyl vinyl ether ratio by a mol% of 50.0/38.8/10.2.

### Preparation Example 3 Clear coating material

To 100 parts by mass of a butyl acetate solution containing 50% by mass of the fluorine-containing copolymer of Production Example 2 was introduced an isocyanate-based curing agent (Duranate TPA-100, available from Asahi Kasei Corp.) such that the equivalent ratio (NCO/OH) of the isocyanate group (NCO) in the isocyanate-based curing agent to the hydroxy group (OH) in the polymer was 1/1. Thus, a coating material composition 3 was obtained.

### Preparation Example 4 White coating material

An amount of 54 parts by mass of titanium oxide (D918, available from Sakai Chemical Industry Co., Ltd.) serving as a white pigment was dispersed in 130 parts by mass of a butyl acetate solution containing 50% by mass of the fluorine-containing copolymer produced in Production Example 2 using a pigment disperser. Thus, a composition was obtained as a pigment-containing dispersion.

Then, to 100 parts by mass of the composition was introduced an isocyanate-based curing agent (Duranate TPA-100, available from Asahi Kasei Chemicals Corporation) such that the equivalent ratio (NCO/OH) of the isocyanate group (NCO) in the isocyanate curing agent to the hydroxy group (OH) in the polymer was 1/1. Thus, a coating material composition 4 was obtained.

### Example 1

The coating material composition 1 obtained in Preparation Example 1 was applied to one surface of an aluminum plate (available from Paltec Co., Ltd., A1050P, AM713-treated plate, thickness 0.8 mm) such that a coating film to be obtained after drying the coating material composition would have a thickness of 30 um. The coating material composition was dried at 80°C for 30 minutes, whereby a double-layer laminate plate 1 was obtained.

### Example 2

The coating material composition 2 obtained in Preparation Example 2 was applied to one surface of an aluminum plate (available from Paltec Co., Ltd., A1050P, AM713-treated plate, thickness 0.8 mm) such that a coating film to be obtained after drying the coating material composition would have a thickness of 30 um. The coating material composition was dried at 80°C for 30 minutes, whereby a double-layer laminate plate 2 was obtained.

### Example 3

A double-layer laminate plate 3 was obtained as in Example 1, except that the coating material composition 3 obtained in Preparation Example 3 was used in place of the coating material composition 1.

### Example 4

A double-layer laminate plate 4 was obtained as in Example 2, except that the coating material composition 4 obtained in Preparation Example 4 was used in place of the coating material composition 2.

### Preparation Examples 5 and 6

### Synthesis of acrylic resin and production of coating material composition

A coating material composition 5 and a coating material composition 6 were respectively obtained as in Preparation Example 1 and Preparation Example 2, except that the acrylic resin used was a copolymer having a methyl methacrylate/n-butyl acrylate/n-butyl methacrylate/2-hydroxyethyl methacrylate ratio by mol% of 53.2/22.5/12.2/12.2.

### Comparative Example 1

A double-layer laminate plate 5 was obtained as in Example 1, except that the coating material composition 5 obtained in Preparation Example 5 was used in place of the coating material composition 1.

### Comparative Example 2

A double-layer laminate plate 6 was obtained as in Example 2, except that the coating material composition 6 obtained in Preparation Example 6 was used in place of the coating material composition 2.

### Example 5

The coating material composition 1 obtained in Preparation Example 1 was applied to the both surfaces of a urethane sheet (hardness A70, width 10 mm, length 100 mm, thickness 1 mm) such that a coating film to be obtained after drying the coating material composition would have a thickness of 7 um. The coating material composition was dried at 80°C for 30 minutes, whereby a laminate plate 7 was obtained.

### Example 6

A laminate plate 8 was obtained as in Example 5, except that the coating material composition 3 obtained in Preparation Example 3 was used in place of the coating material composition 1.

### Comparative Example 3

A laminate plate 9 was obtained as in Example 5, except that the coating material composition 5 obtained in Preparation Example 5 was used in place of the coating material composition 1.

### Production Example 3 (Production of hydroxy group-containing, fluorine-containing copolymer)

A solution was obtained as in Production Example 1, which contained a polymer having a TFE/vinyl acetate/2-hydroxyethyl vinyl ether/undecylenic acid ratio by mol% of 50.0/42.7/6.3/1.0.

### Preparation Example 7 Clear coating material

To 100 parts by mass of a butyl acetate solution containing 50% by mass of the fluorine-containing copolymer of Production Example 3 was introduced an isocyanate-based curing agent (Sumidur N-3300, available from Sumika Covestro Urethane Co.,Ltd.) such that the equivalent ratio (NCO/OH) of the isocyanate group (NCO) in the isocyanate-based curing agent to the hydroxy group (OH) in the polymer was 1/1. Thus, a coating material composition 7 was obtained.

### Preparation Example 8 White coating material

An amount of 54 parts by mass of titanium oxide (D918, available from Sakai Chemical Industry Co., Ltd.) serving as a white pigment was dispersed in 130 parts by mass of a butyl acetate solution containing 50% by mass of the fluorine-containing copolymer produced in Production Example 3 using a pigment disperser. Thus, a composition was obtained as a pigment-containing dispersion.

Then, to 100 parts by mass of the composition was introduced an isocyanate-based curing agent (Sumidur N-3300, available from Sumika Covestro Urethane Co.,Ltd.) such that the equivalent ratio (NCO/OH) of the isocyanate group (NCO) in the isocyanate curing agent to the hydroxy group (OH) in the polymer was 1/1. Thus, a coating material composition 8 was obtained.

### Example 7

A double-layer laminate plate 10 was obtained as in Example 1, except that the coating material composition 7 obtained in Preparation Example 7 was used in place of the coating material composition 1.

### Example 8

A double-layer laminate plate 11 was obtained as in Example 2, except that the coating material composition 8 obtained in Preparation Example 8 was used in place of the coating material composition 2.

### Example 9

A laminate plate 12 was obtained as in Example 5, except that the coating material composition 7 obtained in Preparation Example 7 was used in place of the coating material composition 1.

### Example 10

A laminate plate 13 was obtained as in Example 5, except that the coating material composition 8 obtained in Preparation Example 8 was used in place of the coating material composition 1.

The laminate plates obtained in the examples and comparative examples were subjected to the following tests. The results are shown in Tables 1 and 2.

### (30% Hydrogen peroxide solution spot (immersion) test)

A 30% hydrogen peroxide solution was dropped on the coating film of each laminate plate, and the laminate plate was left to stand at 23°C for seven days. The state of the coating film was then observed and evaluated according to the following criteria.
Good: The coating film was in a normal state.
Poor: The coating film had a crack or swelling.

### (30% Hydrogen peroxide solution mist test)

Specimens of the laminate plates were placed in line on the bottom of a commercially available buckle container (made of polypropylene, 710 × 300 × 160 mm). A 30% hydrogen peroxide solution was kept sprayed with a commercially available atomizer until the coating surfaces of the laminate plate specimens were uniformly wet. A lid of the buckle container was placed to close the container. The container was left to stand in a dryer at 40°C for 16 hours. The lid of the buckle container was removed and the container was left to stand at 40°C for eight hours. This process was counted as one cycle of the test. After repeating this cycle seven times, the state of the coating film of each laminate plate specimen was observed and evaluated according to the following criteria.
Good: The coating film was in a normal state.
Poor: The coating film had a crack or swelling.

### (Hydrogen peroxide plasma test)

Specimens of the laminate plates were placed in line in a plasma chamber. The pressure in the chamber was reduced to 0.05 torr. Then, vaporized hydrogen peroxide was blasted at a pressure of 1 torr. The concentration of hydrogen peroxide relative to the capacity of the chamber was maintained at 0.21 mg for 10 minutes. Furthermore, plasma treatment was performed (performed with 150-W pulsed plasma, plasma cycle: plasma-on state at 0.5 mm/sec, followed by plasma-off state at 1.0 mm/sec) at a frequency of 2.49 MHz for 15 minutes.

The plasma treatment was followed by clean air ventilation of the inside of the chamber. This process was counted as one cycle of the test. After repeating this cycle 200 times, the state of the coating film of each laminate plate specimen was observed and evaluated according to the following criteria.
Good: The coating film was in a normal state.
Poor: The coating film had a crack or swelling.

Moreover, the tensile strength was measured before and after the test with Tensilon RTC-1225A (available from Orientec Corporation).

The tensile strength was measured at a room temperature of 23°C, a distance between test chucks of 50 mm, and a tensile speed of 50 mm/min.

**[Table 1]**

| | | Example 1 | Example 2 | Example 3 | Example 4 | Example 7 | Example 8 | Comparative Example 1 | Comparative Example 2 |
|---|---|---|---|---|---|---|---|---|---|
| | | Laminate plate 1 | Laminate plate 2 | Laminate plate 3 | Laminate plate 4 | Laminate plate 10 | Laminate plate 11 | Laminate plate 5 | Laminate plate 6 |
| 30% H₂O₂ Spot (immersion) test | 23°C, 7 days | Good (normal) | Good (normal) | Good (normal) | Good (normal) | Good (normal) | Good (normal) | Poor (cracked coating, swelling) | Poor (cracked coating, swelling) |
| 30% H₂O₂ Mist test | 7 cycles | Good (normal) | Good (normal) | Good (normal) | Good (normal) | Good (normal) | Good (normal) | Poor (cracked coating, swelling) | Poor (cracked coating, swelling) |

**[Table 2]**

| | | | Example 5 | Example 6 | Example 9 | Example 10 | Comparative Example 3 |
|---|---|---|---|---|---|---|---|
| | | | Laminate plate 7 | Laminate plate 8 | Laminate plate 12 | Laminate plate 13 | Laminate plate 9 |
| H₂O₂ Plasma test | 200 cycles | | Good (normal) | Good (normal) | Good (normal) | Good (normal) | Poor (cracked coating, swelling) |
| | Tensile strength (kgf/cm²) | Before test | 305 | 365 | 672 | 185 | 345 |
| | | After test | 289 | 325 | 605 | 178 | 31 |
| | Tensile strength retension (%) | | 95% | 89% | 90% | 96% | 9% |

## Claims

1. A sterilization method comprising exposing a coating film to hydrogen peroxide,
wherein the coating film comprises a fluorine atom and a urethane bond,
wherein the coating film is a cured product of a coating material composition comprising a hydroxy group-containing fluoropolymer and a polyisocyanate compound,
wherein the hydroxyl-group containing fluoropolymer has a unit based on a fluorine-containing monomer and a unit based on a hydroxy group-containing monomer,
wherein the unit based on a fluorine-containing monomer is present in an amount of 20 to 60 mol% of all the monomer units of the fluoropolymer.

## Patentansprüche

1. Sterilisationsverfahren, umfassend das Aussetzen eines Beschichtungsfilms gegenüber Wasserstoffperoxid,
wobei der Beschichtungsfilm ein Fluoratom und eine Urethanbindung umfasst,
wobei der Beschichtungsfilm ein gehärtetes Produkt einer Beschichtungsmaterialzusammensetzung ist, die ein Hydroxygruppen enthaltendes Fluorpolymer und eine Polyisocyanatverbindung umfasst,
wobei das Hydroxygruppen enthaltende Fluorpolymer eine Einheit auf Basis eines Fluor enthaltenden Monomers und eine Einheit auf Basis eines Hydroxygruppen enthaltenden Monomers aufweist,
wobei die Einheit auf Basis eines Fluor enthaltenden Monomers in einer Menge von 20 bis 60 Mol-% aller Monomereinheiten des Fluorpolymers vorhanden ist.

## Revendications

1. Procédé de stérilisation consistant à exposer un film de revêtement à un peroxyde d'hydrogène,
dans lequel le film de revêtement comprend un atome de fluor et une liaison d'uréthane,
dans lequel le film de revêtement est un produit durci d'une composition de matériau de revêtement comprenant un fluoropolymère contenant un groupe hydroxy et un composé de polyisocyanate,
dans lequel le fluoropolymère contenant un groupe hydroxyle a une unité basée sur un monomère contenant un fluor et une unité basée sur un monomère contenant un groupe hydroxy,
dans lequel l'unité basée sur un monomère contenant un fluor est présente dans une quantité de 20 à 60 % en moles de toutes les unités de monomère du fluoropolymère.
